# FASCICULE DE BREVET EUROPEEN

(11) **EP 3 314 921 B1**
(45) Date de publication et mention de la délivrance du brevet: **05.08.2020**
(21) Numéro de dépôt: 16744439.7
(22) Date de dépôt: 28.06.2016
(51) Int. Cl.: H04L 9/32, H04W 12/06, H04W 4/80

(54) **PROCÉDÉ D'AUTHENTIFICATION POUR CONNECTER UN DISPOSITIF COMPAGNON LORSQU'IL EST DÉCONNECTE D'UN DISPOSITIF SOUSCRIPTEUR**
AUTHENTIFIZIERUNGSVERFAHREN ZUM VERBINDEN EINER PARTNERVORRICHTUNG, WENN DIESE VON EINER TEILNEHMERVORRICHTUNG GETRENNT IST
AUTHENTICATION METHOD FOR CONNECTING A COMPANION DEVICE WHEN SAME IS DISCONNECTED FROM A SUBSCRIBER DEVICE

(30) Priorité: 29.06.2015 FR 1501360
(43) Date de publication de la demande: 02.05.2018
(73) Titulaire: IDEMIA France, 92700 Colombes (FR)
(72) Inventeur: WOZNIAK, Tomasz, 92700 Colombes (FR); LARIGNON, Guillaume, 92700 Colombes (FR)
(74) Mandataire: Cabinet Beau de Loménie
(86) Numéro de dépôt international: PCT/FR2016/051597
(87) Numéro de publication internationale: WO 2017/001763

(56) Documents cités:
- EP-A1- 2 658 297
- EP-A2- 1 487 228
- WO-A1-2011/084117
- US-B1- 8 898 743
- 3GPP: "3rd Generation Partnership Project;3GPP System Architecture Evolution (SAE);Security aspects of non-3GPP accesses; 3GPP TS 33.402 V8.2.1 (Release 8)", , vol. 33.402, no. v8.2.1 1 décembre 2008 (2008-12-01), pages 1-41, XP002545562, Extrait de l'Internet: URL:http://www.3gpp.org/ftp/Specs/archive/ 33_series/33.402/33402-821/zip [extrait le 2009-09-14]

## Description

Le domaine de l'invention concerne un procédé d'authentification auprès d'un serveur d'authentification d'un opérateur de téléphonie mobile pour un dispositif compagnon pouvant être connecté à un service de communication de l'opérateur par l'intermédiaire d'un dispositif souscripteur.

Le marché de la téléphonie mobile voit apparaître des dispositifs vestimentaires accessoires ou dit également dispositifs compagnon qui se connectent à un service de communication d'un opérateur de téléphonie mobile via le téléphone mobile lorsque celui-ci est authentifié au réseau au moyen de son abonnement téléphonique. Par exemple, dans le cas des montres connectée, celles-ci permettent à l'utilisateur de recevoir les notifications de courriers électroniques, le service météorologique ou appels téléphoniques lorsque la montre est connectée au téléphone mobile via une communication de courte portée, généralement une communication selon la norme Bluetooth. Pour fonctionner, la montre doit être à proximité du téléphone mobile.

Or, il est courant que l'utilisateur oublie son téléphone mobile dans un lieu. Bien souvent, pour des raisons d'intégration et de réduction de coût la montre n'est pas dotée d'une carte de souscription (carte SIM, pour « Subscriber Identy Module » en anglais) au réseau téléphonique. Elle est alors dépourvue de la communication lui permettant de recevoir le contenu désiré du fait de son éloignement avec le téléphone mobile

Il existe un environnement logiciel d'une montre qui prévoit, lorsque l'utilisateur s'éloigne de son téléphone mobile, l'initiation d'une connexion par l'intermédiaire d'une interface WIFI au lieu de l'interface Bluetooth. Cette reconfiguration des communications permet de maintenir la connectivité de la montre jusqu'à une portée de plusieurs dizaines de mètres.

Cependant, cette solution n'est pas envisageable lorsque l'utilisateur s'éloigne de plusieurs kilomètres, par exemple lorsqu'il s'éloigne de son domicile.

On connaît le document brevet US20130262629A1 décrivant un système comprenant un dispositif base et un dispositif satellite, ce dernier fonctionnant par l'intermédiaire du dispositif base en mode attaché, via une connexion filaire. Le système prévoit l'établissement d'une connexion tunnel entre la base et le satellite grâce à un échange préalable de clés paire tunnel lorsqu'ils sont connectés permettant une authentification mutuelle.

On connaît également le brevet US8898743B1 décrivant un procédé de contrôle de contenu pour un dispositif multimédia via plusieurs interfaces de communication.

Ces documents décrivent des méthodes d'accès à des services de contenu mais ne proposent pas de solutions pour s'authentifier individuellement à un réseau de communication lorsqu'un dispositif compagnon est éloigné du dispositif souscripteur.

Le document EP 2 658 297 A1 décrit la connexion d'une caméra à un réseau de télécommunication mobile à l'aide d'un téléphone qui est abonné à ce réseau. Le document WO 2011/084117 A1 décrit un procédé de transfert d'un profil d'un premier téléphone portable à un second téléphone portable. Le document EP 1 487 228 A2 décrit l'authentification d'un dispositif compagnon auprès d'un réseau de communication mobile à l'aide d'un téléphone mobile qui est abonné a ce réseau.. Plus précisément, l'invention concerne un procédé d'authentification auprès d'un serveur d'authentification d'un opérateur de téléphonie mobile pour un dispositif compagnon pouvant être connecté à un service de communication de l'opérateur par l'intermédiaire d'un dispositif souscripteur qui a opéré une première authentification auprès du serveur, le dispositif compagnon étant en communication avec le dispositif souscripteur via une première interface de communication sans fil de courte portée. Selon l'invention, le procédé comprend les étapes suivantes :
- la délivrance par le dispositif souscripteur au dispositif compagnon d'un profil temporaire et d'une réponse d'authentification signée par le dispositif souscripteur à destination du serveur;
- l'installation du profil temporaire pour configurer une deuxième interface de communication sans fil du dispositif compagnon;
- la requête d'une deuxième authentification via la deuxième interface auprès du serveur à l'aide de la réponse d'authentification délivrée de sorte à habiliter la deuxième interface lorsque les dispositifs compagnon et souscripteur ne sont pas en communication via la première interface de communication.

Selon une variante, la réponse d'authentification a été signée par le dispositif souscripteur pour opérer la première authentification.

Selon une variante, le procédé comprend également une étape de notification du dispositif souscripteur auprès du serveur d'authentification pour autoriser la réponse d'authentification à être utilisée lors de la deuxième authentification.

Selon une variante, la notification comprend la réponse d'authentification.

Selon une variante, la réponse d'authentification est chiffrée par le dispositif souscripteur avant la délivrance, par exemple au moyen d'une clé publique du dispositif compagnon, ou encore au moyen d'une donnée secrète connue du dispositif souscripteur et du dispositif compagnon. La donnée secrète peut être de type symétrique ou asymétrique.

Selon une variante, la délivrance de la réponse d'authentification est opérée via la première interface ou une troisième interface sécurisée de courte portée, par exemple conforme à la norme ISO/IEC 14443.

Selon une variante, le procédé comprend une étape de notification à destination du serveur d'authentification et/ou d'un serveur de services d'une information de présence de l'utilisateur issue du dispositif compagnon de sorte à déclencher une redirection de services issus du serveur de services directement au dispositif compagnon via la deuxième interface.

Selon une variante, la deuxième interface est un module de communication de téléphonie mobile et la réponse d'authentification comprend au moins un cryptogramme de réponse ayant été généré à partir d'un aléatoire émis par le serveur d'authentification et chiffré à l'aide d'une clé privée hébergée par le dispositif souscripteur.

Selon une variante, la deuxième interface est conforme à la norme IEEE802.11 et la réponse d'authentification permet au dispositif compagnon d'opérer une authentification de type EAP.

L'invention prévoit également un système comprenant un dispositif compagnon et un dispositif souscripteur pour authentifier le dispositif compagnon auprès d'un serveur d'authentification d'un opérateur de téléphonie mobile, le dispositif compagnon pouvant être connecté à un service de communication de l'opérateur par l'intermédiaire d'un dispositif souscripteur qui a opéré une première authentification auprès du serveur, le dispositif compagnon étant en communication avec le dispositif souscripteur via une première interface de communication sans fil de courte portée.

Selon l'invention, le dispositif souscripteur comprend un moyen pour délivrer au dispositif compagnon un profil temporaire et une réponse d'authentification signée par le dispositif souscripteur à destination du serveur; le dispositif compagnon comprend un moyen pour installer le profil temporaire pour configurer une deuxième interface de communication sans fil du dispositif compagnon; le dispositif compagnon comprend un moyen pour exécuter une deuxième authentification via la deuxième interface auprès du serveur à l'aide de la réponse d'authentification délivrée de sorte à habiliter la deuxième interface lorsque les dispositifs compagnon et souscripteur ne sont pas en communication via la première interface de communication.

Grâce à l'invention, le dispositif compagnon reste connecté lorsque le dispositif souscripteur est éloigné. L'invention permet de s'affranchir du coût d'un circuit intégré sécurisé supplémentaire destiné à héberger des identifiants et moyens cryptographiques de façon permanente.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente le procédé d'authentification d'un dispositif compagnon et d'un dispositif souscripteur conformément à l'invention ;
- la figure 2A représente le système formé par le dispositif compagnon et le dispositif souscripteur lorsqu'ils sont en communication ;
- la figure 2B représente le système formé par le dispositif compagnon et le dispositif souscripteur lorsqu'ils ne sont plus en communication.

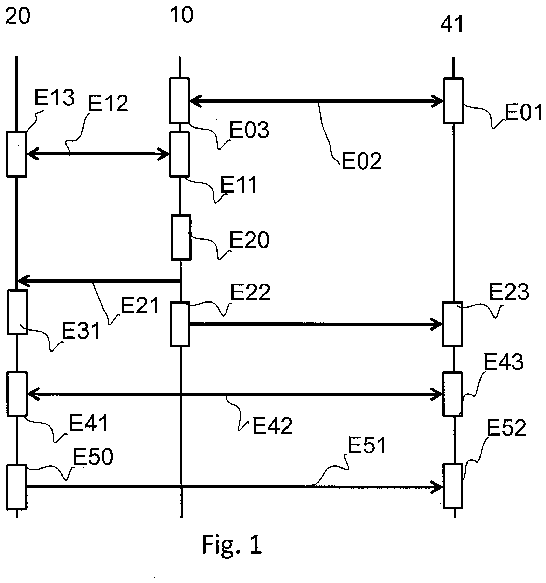

Le procédé conformément à l'invention s'adresse à un système comprenant un dispositif compagnon et un dispositif souscripteur disposant d'un abonnement de communication auprès d'un service d'un opérateur de téléphonie mobile. La figure 1 représente le procédé d'authentification pour un dispositif souscripteur 10 et un dispositif compagnon 20 sur un réseau de téléphonie cellulaire dont l'accès est contrôlé par un serveur d'authentification 41. Le réseau de téléphonie cellulaire supporte l'échange de données voix et de données conformes à un réseau IP, par exemple 2G, 3G ou 4G. Il est envisageable que l'opérateur de téléphonie comprenne également un réseau de communication alternatif par points d'accès sans fil de moyenne portée, de type WIFI. Les points d'accès sont reliés à un réseau de données filaire, par exemple de type ADSL ou fibre optique. Le serveur d'authentification 41 contrôle également l'accès à se réseau. Le serveur d 'authentification 41 est une entité fonctionnelle distribuée en une ou plusieurs entité physique collaborant ensembles.

On entend par le terme dispositif compagnon 20, un dispositif électronique ne bénéficiant pas d'un module d'authentification autonome et permanent pour s'identifier auprès du serveur 41. Le dispositif compagnon est associé à un dispositif souscripteur 10 qui comprend la totalité des moyens d'identification pour opérer de façon indépendante une authentification auprès du serveur 41. On comprend que le dispositif compagnon n'est pas prévu pour fonctionner seul pour jouir des services de l'opérateur de téléphonie mobile.

Les moyens d'identification C1 du dispositif souscripteur 10 sont un profil de souscripteur, les clés de chiffrement privées, les algorithmes de chiffrement ainsi que tout paramètre d'identification. Le profil de souscription en réponse à une requête d'identification du serveur 41 génère une réponse d'authentification, par exemple un cryptogramme signé qui a été généré par le chiffrement d'un défi fourni par le serveur au moyen d'une clé privée et d'un algorithme de chiffrement.

Dans le cadre d'une authentification à un réseau de téléphonie, il s'agit d'un profil de souscripteur auprès de l'opérateur de téléphonie pour se connecter au réseau mobile, notamment l'identifiant du souscripteur (appelé IMSI pour « International Mobile Subscriber Identity » en anglais), des clés privées opérateur, clé maitre ou clé de dérivation utilisées pour chiffrer un aléatoire issu du serveur ou pour chiffrer les données des communications, ainsi que fichiers et paramètres de connexion au serveur 41.

Dans une variante, le procédé permet également d'opérer une authentification EAP (« Extensible Authentification Protocol » en anglais) auprès d'un point d'accès d'un réseau sans fil de moyenne portée de type WIFI. Les moyens d'identification C1 sont le profil de souscripteur, clés de chiffrement, algorithmes de chiffrement pour opérer une authentification via le point d'accès WIFI.

Il est envisageable que les moyens d'identification C1 opèrent à la fois une authentification à un réseau de téléphonie mobile et à un point d'accès.

Le dispositif souscripteur 10 comprend un circuit intégré sécurisé 13 ou un environnement logiciel de confiance conforme aux normes et contraintes de sécurité. Le circuit intégré ou l'environnement de confiance (TE pour « Trusted Environment » en anglais) sont dits sécurisés car l'accès à la mémoire du circuit intégré est protégé par un mot de passe ou phrase secrète. Il n'est également pas possible de lire les données frauduleusement. Le circuit intégré est une carte SIM, un élément sécurisé embarqué (eSE pour « Embedded Secure Element » en anglais). De préférence, les moyens d'identification C1 du dispositif souscripteur 10 sont hébergés dans le circuit intégré sécurisé 13, ou l'environnement logiciel de confiance.

Quant à lui, le dispositif compagnon 20 n'est pas équipé d'un circuit intégré sécurisé spécifiquement destiné pour s'authentifier auprès du serveur 41. Le dispositif compagnon ne mémorise pas de façon permanente des moyens d'identification et ainsi évite une certification couteuse d'un circuit intégré et de la chaine de provisionnement. Le dispositif compagnon peut être un accessoire vestimentaire, par exemple une montre, ou plus généralement tout objet qui est connecté à un service de communication via un dispositif souscripteur, par exemple une télévision, tablette, ou équipement multimédia dans un véhicule connectés via Bluetooth ou WIFI.

Conformément à la figure 1, le procédé d'authentification comprend une première phase d'authentification du dispositif souscripteur 10 avec le serveur d'authentification 41 de l'opérateur de téléphonie mobile. Le dispositif souscripteur 10 est en communication via une première interface de communication sans fil de courte portée (Bluetooth, WIFI) avec le dispositif compagnon 20. Tant que le dispositif souscripteur ne s'est pas authentifié au serveur 41, ni le dispositif souscripteur 10, ni le dispositif compagnon 20 n'ont la capacité d'émettre et recevoir des appels et des données, par exemple des données provenant du réseau de téléphonie mobile. Ils peuvent uniquement échanger de l'information localement, c'est à dire de l'information contenue dans l'un ou l'autre des dispositifs via la première interface de communication.

Lors d'une étape E01, après réception d'un identifiant du dispositif souscripteur 10 (IMSI), le serveur 41 identifie la ou les clés privées hébergées dans le module du souscripteur, hébergées soit dans le circuit intégré sécurisé 13 ou soit un environnement sécurisé. Lors de cette étape E01, le serveur 41 génère un aléatoire, appelé également défi, qui est transmis au dispositif souscripteur 10 pour authentifier sa réponse d'authentification. Conformément au processus d'authentification conventionnel, le serveur 41 chiffre également l'aléatoire avec la clé privée du dispositif souscripteur, la clé étant connue dans ses bases de données à partir de l'identifiant IMSI. Le serveur 41 génère le cryptogramme de vérification qui sert par la suite à authentifier la réponse d'authentification du dispositif souscripteur 10 en comparant la réponse d'authentification signée et le cryptogramme de vérification.

A une étape E03, le dispositif souscripteur 10 opère les opérations d'authentification et génère notamment lors de cette étape la réponse d'authentification à partir de sa clé privée et de l'aléatoire issu du serveur 41. La réponse d'authentification est un cryptogramme de signature obtenu par l'exécution d'un algorithme de chiffrement, par exemple MILENAGE, COMP128, A3, A8 conformément au standard GSM pour Global System for Mobile communication. La réponse d'authentification est connue sous l'acronyme SRES pour une réponse signée.

Lors de l'étape E02, les échanges entre le dispositif souscripteur 10 et le serveur 41 opèrent via le réseau de téléphonie mobile pour exécuter la première authentification.

Si l'authentification du dispositif souscripteur auprès du serveur 41 est réussie, celui-ci est autorisé à recevoir et émettre des appels et données sur le réseau de téléphonie mobile. Les étapes E01, E02 et E03 sont les étapes conventionnelles d'une phase d'authentification à un réseau de téléphonie mobile.

Dans une variante, les étapes E01, E02, E03 sont des étapes d'authentification du dispositif souscripteur de type EAP avec un point d'accès conforme à la norme IEEE802.11.

Ensuite, lorsque les dispositifs compagnon et souscripteur sont en communication via l'interface sans fil courte portée (Bluetooth, WIFI), ceux-ci peuvent échanger des données. Les données sont reçues par le dispositif souscripteur 10 et proviennent du réseau de téléphonie mobile, via son interface GSM, géré par l'opérateur de téléphonie mobile administrant le serveur d'authentification 41.

Lors d'une étape E11, le dispositif souscripteur reçoit des données du réseau de téléphonie mobile via son interface GSM. A une étape E12, des échanges ont lieu entre le dispositif souscripteur 10 et le dispositif compagnon 20 via l'interface de communication sans fil courte portée et à une étape E13, le dispositif compagnon 20 reçoit et traite les données, affichage de notifications, courriers électroniques etc.. Le dispositif compagnon 20 est donc opérationnel pour fonctionner normalement par l'intermédiaire du dispositif souscripteur 10.

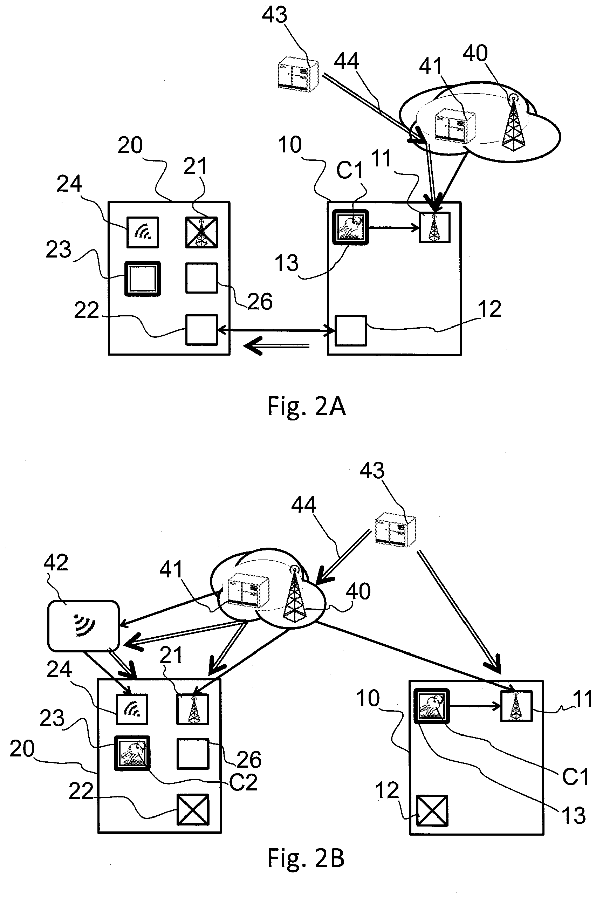

La figure 2A représente les dispositifs compagnon et souscripteur lorsqu'ils sont en communication via les interfaces de communication sans fil courte portée 12, 22 respectivement.

Le dispositif souscripteur 10 comprend le circuit intégré sécurisé 13 contenant le paquet d'authentification C1 pouvant élaborer une réponse d'authentification générée lors de l'authentification avec le serveur 41. Il comprend l'interface 11 pour communiquer avec le réseau de téléphonie mobile 40.

Le dispositif compagnon 20 comprend l'interface 22 pour communiquer avec le dispositif souscripteur 10 et une interface 21 pour communiquer avec un réseau de téléphonie mobile. L'interface 21 à ce stade du procédé n'est pas habilitée à s'authentifier avec un réseau de téléphonie mobile car il ne comprend pas de moyens d'identification et authentification au réseau de l'opérateur.

Il comprend également d'autres interfaces de communication 24, 26 pour communiquer conformément à un protocole WIFI ou un protocole ISO/IEC 14443 en champs proche respectivement.

Le dispositif compagnon 20 comprend un circuit intégré sécurisé 23 comprenant des applications ou données sécurisées destinées à opérer avec l'interface 26 de communication en champs proche. Les applications sont des applications de paiement ou de transport par exemple. Les applications hébergées dans le circuit intégré sécurisé 23 peuvent échanger conformément au protocole ISO/IEC 14443 avec l'interface 26.

On notera qu'un serveur 43 de gestion de services multimédias ou d'échange de contenu (appels, données, notifications d'informations, SMS (« Short Message Service » en anglais)) commande l'envoi de données vers des applications hébergées dans le dispositif souscripteur 10. Le dispositif compagnon 20 reçoit ensuite les données du serveur 43 par l'intermédiaire du dispositif souscripteur 10. Les flèches 44 représentent le flux des données émises par le serveur de services 43.

Par ailleurs, le procédé d'authentification comprend à une étape E20 la préparation d'un paquet d'authentification C2 à transmettre au dispositif compagnon 20 via l'interface 22 de courte portée. Le paquet d'authentification comprend au moins un profil temporaire et une réponse d'authentification signée par le dispositif souscripteur 10, de préférence lors de la première authentification E03. Le paquet d'authentification comprend de préférence également des paramètres de connexion au serveur 41. Le profil souscripteur temporaire comprend par exemple un numéro IMSI temporaire associé au profil de souscripteur du dispositif souscripteur 10. D'autres réponses d'authentification peuvent être comprises selon la première authentification opérée.

Le paquet d'authentification C2 est un paquet logiciel comprenant des fichiers, scripts et paramètres nécessaires à une installation logicielle dans le dispositif compagnon 20 pour exécuter des fonctions d'authentification avec une interface de communication. Par exemple, le paquet logiciel peut comprendre une suite d'instructions de commandes APDU (« Application Protocol Data Unit » en anglais) pour installer le paquet d'authentification dans l'élément sécurisé 23.

On notera que le profil temporaire est reconnaissable par le serveur 41 car il est associé au profil du souscripteur présent dans le dispositif souscripteur 10. Le profil temporaire peut être un clone du profil du souscripteur ou un identifiant dérivé de l'identifiant du souscripteur. Le profil est temporaire car il est valide durant une durée limitée, par exemple un durée prédéfinie par le serveur 41.

A une étape E21, le procédé comprend la délivrance du profil temporaire et de la réponse d'authentification au dispositif compagnon 20 via l'interface de communication sans fil courte portée par le dispositif souscripteur. Les étapes E20, E21 peuvent être exécutées sur initiative de l'utilisateur, automatiquement selon un rafraichissement prévu, ou à la suite d'un événement d'authentification du dispositif souscripteur 10 avec le serveur d'authentification 41.

Dans une variante, la délivrance du profil temporaire et de la réponse d'authentification est opérée via une autre interface sans fil courte portée sécurisée 26, par exemple une interface conforme à la norme ISO/IEC 14443. Cette interface a une portée de quelques centimètres. La préparation du paquet d'authentification et son échange sont opérés sur initiative de l'utilisateur ou sur requête du dispositif souscripteur ou du dispositif compagnon via un applicatif et l'écran des dispositifs. On notera que le dispositif souscripteur 10 est alors également équipé d'une interface de communication sans fil courte portée conforme à la norme ISO/IEC 14443.

A l'étape E31, le procédé comprend l'installation E31 du profil temporaire du souscripteur appartenant au paquet d'authentification C2 pour configurer une deuxième interface de communication sans fil 21, 24 du dispositif compagnon 20. L'installation est la phase d'écriture du profil temporaire dans l'élément sécurisé 23. Il s'agit par exemple le paramétrage de la connexion (adresse d'accès au serveur), le choix du protocole d'authentification. La réponse d'authentification signée transmise lors de la délivrance E21 est mémorisée dans l'élément sécurisé 23.

De plus, il est prévu dans le cadre de l'invention que le paquet d'authentification C2 installé dans le circuit intégré 23 puisse opérer des échanges avec les interfaces 21, 24 de communication. Le paquet d'authentification C2 permet notamment de mener un protocole d'authentification conforme à un protocole d'authentification auprès d'un réseau de téléphonie mobile via l'interface 21 et/ou un réseau conforme à la norme à la norme IEEE802.11 via l'interface 24.

La figure 2B représente la situation lorsque le dispositif souscripteur 10 est éloigné du dispositif compagnon 20 de sorte que l'interface 22 ne soit plus en communication avec l'interface 12, par exemple lorsque l'utilisateur quitte son domicile et oublie sont téléphone. L'interface 22 n'est plus synchronisée avec l'interface 12 et n'est plus habilitée pour recevoir des données. La fin de la communication est détectée par un événement de détection du dispositif compagnon 20, ainsi que par le dispositif souscripteur 10. L'événement de détection peut être un statut de la communication indiquant la présence de la communication ou la perte de la communication.

Dans une variante, le procédé comprend également une étape de notification E22 du dispositif souscripteur 10 auprès du serveur d'authentification 41 pour autoriser la réponse d'authentification à être utilisée lors d'une deuxième authentification E41. Cette notification est déclenchée en fonction du statut de la communication. Lorsque le dispositif souscripteur 10 détecte l'événement de fin de communication avec le dispositif compagnon 20 via les interfaces 12, 22, la notification E22 est émise.

La notification E22 peut comprendre un identifiant de la réponse d'authentification à autoriser, les données nécessaires à la génération de la réponse d'authentification, la réponse d'authentification ou un dérivé de la réponse d'authentification permettant au serveur 41 de procéder à la vérification E43 de la deuxième authentification.

A l'étape E23, le serveur 41 autorise une deuxième authentification avec l'usage de la réponse d'authentification signée par le dispositif souscripteur 10 et par un profil temporaire de souscripteur.

Les étapes E22, E23 permettent au serveur 41 de sécuriser l'utilisation de la réponse d'authentification signée par le dispositif souscripteur par un dispositif compagnon. Si la notification n'est pas reçue, le serveur refuse une deuxième authentification avec la réponse d'authentification.

A une étape E41, le procédé comprend une deuxième authentification du dispositif compagnon 20 auprès du serveur 41 à l'aide de la réponse d'authentification signée par le dispositif souscripteur via la deuxième interface 21. La deuxième authentification permet d'habiliter la deuxième interface lorsque les dispositifs compagnon 20 et souscripteur 10 ne sont pas en communication via la première interface de communication 22. Un applicatif de protocole d'authentification commande les échanges E42 avec le serveur 41.

On notera que la deuxième authentification est opérée lorsque le statut de fin de communication entre le dispositif souscripteur et le dispositif compagnon est détecté.

A une étape E43, le procédé comprend les étapes de vérification de la réponse d'authentification provenant du dispositif compagnon. L'authentification est acceptée si la signature de la réponse d'authentification est conforme à l'identité du souscripteur et si le serveur 41 a été préalablement notifié de l'usage de la réponse d'authentification le cas échéant.

En cas de non conformité de la réponse d'authentification avec l'identité temporaire du souscripteur 10, le serveur refuse l'authentification à l'étape E43.

On notera que la réponse d'authentification a été signée par le dispositif souscripteur 10 et transmise au serveur 41 lors de la première authentification E03. La réponse d'authentification a été signée par le dispositif souscripteur pour opérer la première authentification E03.

Dans une variante, le serveur 41 a transmis un défi qui est ensuite dérivé par le dispositif souscripteur, la dérivation pouvant être exécutée en parallèle au niveau du serveur 41 selon des règles connues des deux entités. Un défi dérivé peut être signé et transmis au dispositif compagnon 20 pour effectuer la deuxième authentification.

Il est également envisageable que le serveur lors d'une première authentification transmette plusieurs défis pour générer plusieurs réponses d'authentification qui sont ensuite signée par le dispositif souscripteur.

Dans une variante, la requête d'authentification E41 est conforme au protocole EAP et est opérée pour habiliter l'interface E24 du dispositif compagnon 20 pour communiquer avec un point d'accès 42 conforme à la norme IEEE802.11. Cette variante est opérée lorsque la première authentification E03 avec le serveur 41 est conforme avec le protocole EAP pour une interface WIFI du dispositif souscripteur 10.

Il est envisageable que le serveur 41 délègue les étapes d'authentification à un authentificateur de confiance du réseau de l'opérateur 42, par exemple à un point d'accès WIFI.

Par ailleurs, dans une variante la notification E22 déclenche également une redirection des services (du flux de données 44) du serveur 43 de gestion pour les diriger vers le dispositif compagnon 20 directement en même temps que le dispositif souscripteur 10, ou dans un autre mode exclusivement vers le dispositif compagnon 20. Pour cela, il est envisageable que le serveur d'authentification 41 transmette un ordre de redirection à destination du serveur 43.

Dans une variante, la notification E22 est transmise également au serveur 43 de gestion de services multimédias ou d'échange de contenu à destination d'une application de service du dispositif compagnon 20 et du dispositif souscripteur 10, la notification étant transmise directement au serveur 43 de gestion de services.

Dans une variante, l'ordre de redirection est fonction également de la détection d'une authentification réussie E43 du serveur 41 avec le dispositif compagnon 20.

Dans une variante, le procédé comprend une deuxième notification E51 du dispositif compagnon 20 à destination du serveur 41 et/ou du serveur de service 43 d'une information de présence de l'utilisateur en compagnie du dispositif compagnon 20. L'information de présence est résultante d'une action réussie E50 sur une interface utilisateur du dispositif compagnon (saisie écran, actionnement bouton, capture voix ou message audio, lecture empreinte digitale, lecture du pouls, lecture d'un rythme cardiaque ou capture caméra) ou d'une requête réussie E50 de saisie d'un code secret, lecture empreinte ou détection voix par l'utilisateur sur le dispositif compagnon 20.

Le serveur 41 génère un ordre E52 de redirection du flux 44 des services à destination du serveur de service 43 conformément à l'information de présence. Si l'information de présence indique la présence de l'utilisateur, le flux de services 44 est dirigé directement au dispositif compagnon 20, de façon exclusive ou non.

La deuxième notification E51 est émise par le dispositif 20 lorsque la deuxième authentification est réussie et que l'interface de communication 21 (ou 24) est habilitée par le serveur 41.

Dans cette situation, le serveur 41 (et parallèlement le serveur 43 de services multimédias ou d'échange de contenu) est informé que le dispositif souscripteur 10 est temporairement éloigné de l'utilisateur, du fait de la détection de coupure de la connexion entre le dispositif compagnon et le dispositif souscripteur (via la notification E22) et de la détection de la présence de l'utilisateur avec le dispositif compagnon 20 (via la deuxième notification E51).

On notera également que le procédé comprend dans une variante une étape (non représentée sur la figure) d'authentification de l'utilisateur par la saisie d'un code secret, lecture empreinte ou détection voix sur le dispositif compagnon pour autoriser la deuxième requête d'authentification E41. Ainsi, l'utilisation de la réponse d'authentification signée est sécurisée contre l'utilisation d'un tiers non reconnu.

Le procédé d'authentification évite le recours à un circuit intégré sécurisé SIM d'un opérateur de téléphonie devant être certifié par les organismes officiels pour héberger de façon permanente un paquet d'authentification, notamment les clés cryptographiques privées, avec le serveur d'authentification 41. Il est envisageable d'utiliser par exemple le circuit intégré 23 destiné à héberger les applications de paiement NFC (« Near field Contact »). Le procédé bénéficie de la sécurité du circuit intégré 23 utilisé par d'autres applications sécurisées tout en évitant le coût d'un deuxième circuit intégré de type SIM et de la certification nécessaire.

Dans le cas d'une authentification avec le réseau de téléphonie, le profil souscripteur temporaire et la réponse d'authentification sont mémorisés temporairement et effacés lorsque le dispositif compagnon est de nouveau en communication avec le dispositif souscripteur 10 via l'interface 21, 22 de courte portée. L'ordre d'effacement est fonction de l'événement de détection de la communication ou fonction d'un ordre issu du serveur 41.

## Revendications

1. Procédé d'authentification auprès d'un serveur d'authentification (41) d'un opérateur de téléphonie mobile pour un dispositif compagnon (20) pouvant être connecté à un service de communication (40;42) de l'opérateur par l'intermédiaire d'un dispositif souscripteur (10) qui a opéré une première authentification (E03) auprès du serveur (41), le dispositif compagnon (20) étant en communication avec le dispositif souscripteur (10) via une première interface de communication sans fil de courte portée (22), **caractérisé en ce qu'**il comprend les étapes suivantes :
- la délivrance (E21) par le dispositif souscripteur (10) au dispositif compagnon (20) d'un profil temporaire et d'une réponse d'authentification signée par le dispositif souscripteur à destination du serveur (41), la réponse d'authentification ayant été signée par le dispositif souscripteur (10) pour opérer la première authentification (E03);
- l'installation (E31) du profil temporaire pour configurer une deuxième interface de communication sans fil (21 ; 24) du dispositif compagnon (20);
- la requête d'une deuxième authentification (E41) via la deuxième interface (21 ; 24) auprès du serveur (41) à l'aide de la réponse d'authentification délivrée de sorte à habiliter la deuxième interface lorsque les dispositifs compagnon (20) et souscripteur (10) ne sont pas en communication via la première interface de communication (22).

2. Procédé selon la revendication 1, **caractérisé en ce qu'**il comprend également une étape de notification (E22) du dispositif souscripteur (10) auprès du serveur d'authentification (41) pour autoriser la réponse d'authentification à être utilisée lors de la deuxième authentification (E43).

3. Procédé selon la revendication 2, **caractérisé en ce que** la notification (E22) comprend la réponse d'authentification.

4. Procédé selon l'une quelconque des revendications 1 à 3, **caractérisé en ce que** la réponse d'authentification est chiffrée par le dispositif souscripteur (10) avant la délivrance (E21).

5. Procédé selon l'une quelconque des revendications 1 à 4, **caractérisé en ce que** la délivrance de la réponse d'authentification est opérée via la première interface (22) ou une troisième interface (26) sécurisée de courte portée, par exemple conforme à la norme ISO/IEC 14443.

6. Procédé selon l'une quelconque des revendication 1 à 5, **caractérisé en ce qu'**il comprend une étape de notification (E51) à destination du serveur d'authentification (41) et/ou d'un serveur de services (43) d'une information de présence de l'utilisateur issue du dispositif compagnon (20) de sorte à déclencher une redirection (E52) de services issus du serveur de services (43) directement au dispositif compagnon (20) via la deuxième interface (21 ; 24).

7. Procédé selon l'une quelconque des revendications 1 à 6, **caractérisé en ce que** la deuxième interface (21) est un module de communication de téléphonie mobile et la réponse d'authentification comprend au moins un cryptogramme de réponse ayant été généré à partir d'un aléatoire émis par le serveur d'authentification (41) et chiffré à l'aide d'une clé privée hébergée par le dispositif souscripteur (10).

8. Procédé selon l'une quelconque des revendications 1 à 6, **caractérisé en ce que** la deuxième interface (24) est conforme à la norme IEEE802.11 et la réponse d'authentification permet au dispositif compagnon d'opérer une authentification de type EAP.

9. Système comprenant un dispositif compagnon (20) et un dispositif souscripteur (10) pour authentifier le dispositif compagnon (20) auprès d'un serveur d'authentification (41) d'un opérateur de téléphonie mobile, le dispositif compagnon (20) pouvant être connecté à un service de communication (40 ;42) de l'opérateur par l'intermédiaire d'un dispositif souscripteur (10) qui a opéré une première authentification (E03) auprès du serveur (41), le dispositif compagnon (20) étant en communication avec le dispositif souscripteur (10) via une première interface de communication sans fil de courte portée (22), **caractérisé en ce que** :
- le dispositif souscripteur (10) comprend un moyen pour délivrer (E21) au dispositif compagnon (20) un profil temporaire et une réponse d'authentification signée par le dispositif souscripteur à destination du serveur (41), la réponse d'authentification ayant été signée par le dispositif souscripteur (10) pour opérer la première authentification (E03);
- le dispositif compagnon (20) comprend un moyen pour installer (E31) le profil temporaire pour configurer une deuxième interface de communication sans fil (21; 24) du dispositif compagnon (20);
- le dispositif compagnon (20) comprend un moyen pour exécuter une deuxième authentification (E41) via la deuxième interface (21 ; 24) auprès du serveur (41) à l'aide de la réponse d'authentification délivrée de sorte à habiliter la deuxième interface lorsque les dispositifs compagnon (20) et souscripteur (10) ne sont pas en communication via la première interface de communication (22).

## Patentansprüche

1. Verfahren zur Authentifizierung bei einem Authentifizierungsserver (41) eines Mobilfunkbetreibers für eine Begleitvorrichtung (20), die mit einem Kommunikationsdienst (40; 42) des Betreibers über eine Teilnehmervorrichtung (10) verbunden werden kann, die eine erste Authentifizierung (E03) bei dem Server (41) durchgeführt hat, wobei die Begleitvorrichtung (20) über eine erste drahtlose Kommunikationsschnittstelle kurzer Reichweite (22) mit der Teilnehmervorrichtung (10) in Verbindung steht, **dadurch gekennzeichnet, dass** es die folgenden Schritte umfasst:
- das Ausgeben (E21) eines temporären Profils und einer durch die Teilnehmervorrichtung signierten Authentifizierungsantwort für den Server (41) durch die Teilnehmervorrichtung (10) an die Begleitvorrichtung (20), wobei die Authentifizierungsantwort durch die Teilnehmervorrichtung (10) signiert worden ist, um die erste Authentifizierung (E03) durchzuführen,
- das Installieren (E31) des temporären Profils, um eine zweite drahtlose Kommunikationsschnittstelle (21; 24) der Begleitvorrichtung (20) zu konfigurieren,
- das Anfordern einer zweiten Authentifizierung (E41) über die zweite Schnittstelle (21; 24) bei dem Server (41) mit Hilfe der ausgegebenen Authentifizierungsantwort, um die zweite Schnittstelle zu berechtigen, wenn die Begleitvorrichtung (20) und die Teilnehmervorrichtung (10) nicht über die erste Kommunikationsschnittstelle (22) in Verbindung stehen.

2. Verfahren nach Anspruch 1, **dadurch gekennzeichnet, dass** es auch einen Schritt zur Benachrichtigung (E22) der Teilnehmervorrichtung (10) bei dem Authentifizierungsserver (41) umfasst, um zu erlauben, die Authentifizierungsantwort bei der zweiten Authentifizierung (E43) zu verwenden.

3. Verfahren nach Anspruch 2, **dadurch gekennzeichnet, dass** die Benachrichtigung (E22) die Authentifizierungsantwort umfasst.

4. Verfahren nach einem der Ansprüche 1 bis 3, **dadurch gekennzeichnet, dass** die Authentifizierungsantwort durch die Teilnehmervorrichtung (10) vor der Ausgabe (E21) verschlüsselt wird.

5. Verfahren nach einem der Ansprüche 1 bis 4, **dadurch gekennzeichnet, dass** die Ausgabe der Authentifizierungsantwort über die erste Schnittstelle (22) oder eine gesicherte dritte Schnittstelle (26) kurzer Reichweite, beispielsweise gemäß ISO/IEC 14443, vollzogen wird.

6. Verfahren nach einem der Ansprüche 1 bis 5, **dadurch gekennzeichnet, dass** es einen Schritt einer Benachrichtigung (E51) an den Authentifizierungsserver (41) und/oder einen Diensteserver (43) von einer von der Begleitvorrichtung (20) kommenden Information über die Anwesenheit des Nutzers umfasst, um eine Umleitung (E52) von Diensten aus dem Diensteserver (43) direkt zu der Begleitvorrichtung (20) über die zweite Schnittstelle (21; 24) auszulösen.

7. Verfahren nach einem der Ansprüche 1 bis 6, **dadurch gekennzeichnet, dass** die zweite Schnittstelle (21) ein Mobilfunkkommunikationsmodul ist und die Authentifizierungsantwort wenigstens ein Antwortkryptogramm umfasst, das aus einer durch den Authentifizierungsserver (41) gesendeten Zufälligkeit generiert und mit Hilfe eines von der Teilnehmervorrichtung (10) gehosteten privaten Schlüssels verschlüsselt worden ist.

8. Verfahren nach einem der Ansprüche 1 bis 6, **dadurch gekennzeichnet, dass** die zweite Schnittstelle (24) gemäß der Norm IEEE802.11 ist und die Authentifizierungsantwort der Begleitvorrichtung ermöglicht, eine Authentifizierung vom Typ EAP durchzuführen.

9. System, umfassend eine Begleitvorrichtung (20) und eine Teilnehmervorrichtung (10), um die Begleitvorrichtung (20) bei einem Authentifizierungsserver (41) eines Mobilfunkbetreibers zu authentifizieren, wobei die Begleitvorrichtung (20) mit einem Kommunikationsdienst (40; 42) des Betreibers über eine Teilnehmervorrichtung (10) verbunden werden kann, die eine erste Authentifizierung (E03) bei dem Server (41) durchgeführt hat, wobei die Begleitvorrichtung (20) über eine erste drahtlose Kommunikationsschnittstelle kurzer Reichweite (22) mit der Teilnehmervorrichtung (10) in Verbindung steht, **dadurch gekennzeichnet, dass**:
- die Teilnehmervorrichtung (10) ein Mittel zum Ausgeben (E21) eines temporären Profils und einer durch die Teilnehmervorrichtung signierten Authentifizierungsantwort für den Server (41) an die Begleitvorrichtung (20) umfasst, wobei die Authentifizierungsantwort durch die Teilnehmervorrichtung (10) signiert worden ist, um die erste Authentifizierung (E03) durchzuführen,
- die Begleitvorrichtung (20) ein Mittel umfasst, um das temporäre Profil zu installieren (E31), um eine zweite drahtlose Kommunikationsschnittstelle (21; 24) der Begleitvorrichtung (20) zu konfigurieren,
- die Begleitvorrichtung (20) ein Mittel umfasst, um eine zweite Authentifizierung (E41) über die zweite Schnittstelle (21; 24) bei dem Server (41) mit Hilfe der ausgegebenen Authentifizierungsantwort durchzuführen, um die zweite Schnittstelle zu berechtigen, wenn die Begleitvorrichtung (20) und die Teilnehmervorrichtung (10) nicht über die erste Kommunikationsschnittstelle (22) in Verbindung stehen.

## Claims

1. A method of authenticating a companion device (20) with an authentication server (41) of a mobile telephone operator, the companion device (20) being connectable to a communication service (40; 42) of the operator via a subscriber device (10) that has performed a first authentication (E03) with the server (41), the companion device (20) being in communication with the subscriber device (10) via a first wireless communication interface (22) of short range; the method being **characterized in that** it comprises the following steps:
• the subscriber device (10) delivering (E21) to the companion device (20) a temporary profile and an authentication response signed by the subscriber device for sending to the server (41), the authentication response having been signed by the subscriber device (10) in order to perform the first authentication (E03);
• installing (E31) the temporary profile to configure a second wireless communication interface (21; 24) of the companion device (20); and
• requesting (E41) a second authentication from the server (41) via the second interface (21; 24) by using the delivered authentication response so as to authorize the second interface when the companion device (20) and subscriber device (10) are not in communication with each other via the first communication interface (22).

2. A method according to claim 1, **characterized in that** it also comprises a step (E22) of the subscriber device (10) notifying the authentication server (41) in order to allow the authentication response to be used during the second authentication (E43).

3. A method according to claim 2, **characterized in that** the notification (E22) comprises the authentication response.

4. A method according to any one of claims 1 to 3, **characterized in that** the authentication response is encrypted by the subscriber device (10) prior to delivery (E21).

5. A method according to any one of claims 1 to 4, **characterized in that** the authentication response is delivered via the first interface (22) or via a secure third interface (26) of short range, e.g. in compliance with the ISO/IEC 14443 standard.

6. A method according to any one of claims 1 to 5, **characterized in that** it includes a step (E51) of notifying presence information to the authentication server (41) and/or to a services server (43) concerning the presence of the user and coming from the companion device (20) so as to trigger forwarding (E52) of services coming from of the services server (43) directly to the companion device (20) via the second interface (21; 24).

7. A method according to any one of claims 1 to 6, **characterized in that** the second interface (21) is a mobile telephone communication module and the authentication response includes at least a response cryptogram that was generated from a random number transmitted by the authentication server (41) and encrypted using a private key hosted by the subscriber device (10).

8. A method according to any one of claims 1 to 6, **characterized in that** the second interface (24) complies with the IEEE802.11 standard, and the authentication response enables the companion device to perform authentication of the EAP type.

9. A system comprising a companion device (20) and a subscriber device (10) for authenticating the companion device (10) with an authentication server (41) of a mobile telephone operator, the companion device (20) being connectable to a communication service (40; 42) of the operator via a subscriber device (10) that has performed a first authentication (E03) with the server (41), the companion device (20) being in communication with the subscriber device (10) via a first wireless communication interface (22) of short range; the system being **characterized in that**:
• the subscriber device (10) includes means for delivering (E21) to the companion device (20) a temporary profile and an authentication response signed by the subscriber device for sending to the server (41), the authentication response having been signed by the subscriber device (10) in order to perform the first authentication (E03);
• the companion device (20) includes means for installing (E31) the temporary profile in order to configure a second wireless communications interface (21; 24) of the companion device (20); and
• the companion device (20) includes means for executing (E41) a second authentication with the server (41) via the second interface (21; 24) by using the delivered authentication response so as to authorize the second interface when the companion device (20) and subscriber device (10) are not in communication with each other via the first communication interface (22).
